(19) Europäisches Patentamt
European Patent Office
Office européen des brevets

(11) **EP 3 517 442 B1**

(12) **FASCICULE DE BREVET EUROPEEN**

(45) Date de publication et mention
de la délivrance du brevet:
**22.04.2020 Bulletin 2020/17**

(51) Int Cl.:
***B64D 15/20*** (2006.01)      ***G06N 99/00*** (2019.01)
***G06Q 10/04*** (2012.01)      ***G06N 20/00*** (2019.01)
***G06N 20/20*** (2019.01)      ***G06N 5/00*** (2006.01)
***G06Q 50/30*** (2012.01)

(21) Numéro de dépôt: **19152850.4**

(22) Date de dépôt: **21.01.2019**

(54) **MÉTHODE DE DÉTECTION DE CONDITIONS GIVRANTES POUR UN AÉRONEF PAR APPRENTISSAGE AUTOMATIQUE SUPERVISÉ**

METHODE ZUR ERKENNUNG DER VEREISUNGSBEDINGUNGEN FÜR EIN LUFTFAHRZEUG DURCH ÜBERWACHTEN MASCHINELLEN LERNPROZESS

METHOD FOR DETECTING FREEZING CONDITIONS FOR AN AIRCRAFT BY SUPERVISED AUTOMATIC LEARNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.01.2018 FR 1850553**

(43) Date de publication de la demande:
**31.07.2019 Bulletin 2019/31**

(73) Titulaire: **Airbus Operations S.A.S.**
**31060 Toulouse (FR)**

(72) Inventeurs:
• **PASQUIE, Jean**
  **31000 TOULOUSE (FR)**
• **CALMELS, Alice**
  **31700 BLAGNAC (FR)**

(74) Mandataire: **Gicquel, Olivier Yves Gérard**
**Airbus Opérations (S.A.S)**
**XIF - M0101/1**
**316, route de Bayonne**
**31060 Toulouse Cedex (FR)**

(56) Documents cités:
**EP-A1- 2 979 980      EP-A1- 3 269 944**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## DOMAINE TECHNIQUE

La présente invention concerne de manière générale la prévision de conditions météorologiques pour un aéronef. Elle concerne également le domaine de l'apprentissage supervisé (*supervised machine learning*).

## ÉTAT DE LA TECHNIQUE ANTÉRIEURE

La survenance de conditions givrantes en vol constitue un risque pour les aéronefs. En effet, lorsqu'un aéronef rencontre de telles conditions, il est exposé à une accumulation de givre sur ses surfaces qui peut conduire à une augmentation significative du poids de l'aéronef, une perte de portance, des problèmes d'actionnement des gouvernes, des défauts de communication et de fonctionnement des antennes, des erreurs de mesure des sondes anémométriques, des pertes de poussée moteur, ces différents dysfonctionnements pouvant conduire ultimement à une perte de contrôle de l'avion.

Pour pallier ces dysfonctionnements, les aéronefs habilités à voler dans des conditions givrantes sont équipés de systèmes de protection *ad hoc,* notamment de systèmes chauffants, intégrés aux éléments à protéger (voilure, sondes, entrées air moteur etc.) prévenant la formation ou l'accumulation du givre.

L'activation de ces systèmes de protection repose généralement sur le jugement du pilote après qu'il ait visuellement identifié la présence de conditions givrantes. Cette identification étant nécessairement imparfaite, il est généralement fait recours à des systèmes de détection mécanique ou optique pour aider le pilote dans son jugement. Ainsi, il est courant d'équiper un aéronef de sondes (ou de capteurs) montées sur la peau de l'avion et d'exploiter les mesures obtenues pour diagnostiquer la présence de givre. Toutefois, ces systèmes de détection ne déclenchent généralement pas automatiquement l'activation des systèmes de protection. Une appréciation des mesures par le pilote reste nécessaire prenant en compte la phase de vol, la criticité des fonctions remplies par les éléments affectés par le givre et des marges de sécurité associées, afin d'éviter tout déclenchement intempestif des systèmes de protection.

Les systèmes actuels de détection de conditions givrantes présentent plusieurs inconvénients.

Tout d'abord, ces systèmes sont installés sur la peau du fuselage ou une surface de l'aéronef, ce qui, d'une part, nécessite de percer le fuselage/ la surface en question, de prévoir des renforts mécaniques à proximité du trou, de déployer un câblage électrique et d'installer des systèmes d'acquisition supplémentaires dans des armoires électriques. En outre, les capteurs/ sondes dépassent souvent de la peau du fuselage et engendrent par conséquent une trainée induite, ce qui affecte les performances de l'aéronef.

Ensuite, les systèmes actuels de détection de conditions givrantes ont des performances relativement limitées au sens où ils ne sont capables que de répondre à certaines conditions très limitées de formation du givre. Ils sont généralement inefficaces lorsqu'il s'agit de détecter la formation de larges gouttes d'eau ou de cristaux de grande taille.

EP 2979980 A1 décrit une méthode de détection de conditions de givrage pour un aéronef comprenant une étape de mesure de paramètres de systèmes de l'aéronef à l'exception de sondes externes de détection de givre, lesdits systèmes étant susceptibles de fonctionnement dégradé en présence de givre et lesdits paramètres étant symptomatiques de la présence de givre sur l'aéronef.

Un objet de la présente invention est de proposer une méthode de détection de conditions givrantes pour un aéronef, qui remédie au moins en partie aux inconvénients ci-dessus, en particulier qui ne requiert pas d'opérations de perçage et de câblage supplémentaires, n'augmente ni le poids de l'avion ni sa trainée aérodynamique, et permette à la fois d'appréhender une large gamme de conditions givrantes et de fournir un diagnostic plus précis que dans l'art antérieur.

## EXPOSÉ DE L'INVENTION

La présente invention concerne une méthode de détection de conditions de givrage pour un aéronef, comprenant les étapes suivantes :

- mesure de paramètres de systèmes de l'aéronef à l'exception de sondes externes de détection de givre, lesdits systèmes étant insusceptibles de fonctionnement dégradé en présence de givre et lesdits paramètres étant symptomatiques de la présence de givre sur l'aéronef;
- transformation des mesures de ces paramètres en P -uplets de valeurs de variables explicatives des conditions de givrage ;
- classification des mesures par au moins un classifieur préalablement entrainé de manière supervisée, ledit classifieur fournissant une prédiction d'appartenance à une classe de conditions de givrage.

Les paramètres de systèmes de l'aéronef sont avantageusement choisis parmi les listes de paramètres de ATA21, ATA27, ATA28, ATA30, ATA32, ATA34, ATA36, ATA70 à ATA79.

Les paramètres peuvent être sélectionnés parmi des températures, des courants de circuits de chauffage, des pressions, des écarts entre commandes et retours d'actionneurs, des paramètres cinématiques, altimétriques, barométriques et anémométriques.

La transformation des mesures de paramètres en valeurs de variables explicatives comprend par exemple le calcul d'une moyenne, d'une médiane, d'un écart-type, d'une variance, une transformée de Fourier, un filtrage passe-bas ou passe-haut, une décomposition en ondelettes, un calcul de densité spectrale.

L'étape de classification est avantageusement effectuée par une pluralité de classifieurs, les prédictions respectives de ces classifieurs étant consolidées, le résultat de la consolidation donnant une prédiction de la présence/absence de givre ou non, ou bien un degré de sévérité des conditions de givrage.

Les classifieurs utilisent de préférence des modèles de classification choisis parmi un modèle de classification à arbre de décision, un modèle de classification à analyse discriminante linéaire, un modèle de classification à analyse discriminante quadratique, un modèle de classification à forêt d'arbres décisionnels, un modèle de classification utilisant un bagging d'arbres décisionnels, un modèle de classification utilisant un régression logistique, un modèle de classification utilisant la méthode des k plus proches voisins, un modèle de classification utilisant un boosting de classifieurs faibles.

Les mesures de paramètres peuvent notamment être transmises par l'appareil à une station au sol, ladite station au sol effectuant lesdites étapes de transformation et de classification puis renvoyant le résultat de la consolidation à l'aéronef.

La présente invention concerne également une méthode d'entrainement supervisé de la méthode de prédiction de conditions de givrage définie précédemment, la méthode d'entrainement supervisé comprenant les étapes suivantes :

- mesure desdits paramètres de systèmes de l'aéronef pendant un vol en conditions givrantes;
- transformation des mesures de ces paramètres en $P$-uplets de valeurs de variables explicatives des conditions de givrage ;
- détection de présence de conditions givrantes pendant ledit vol au moyen de sondes dédiées situées sur l'aéronef ;
- attribution de classes de conditions givrantes auxdites mesures à partir des conditions détectées à l'étape précédente ;
- entrainement d'une pluralité de classifieurs à partir des variables explicatives et des classes correspondantes attribuées ;
- comparaison des performances de prédiction desdits classifieurs par validation croisée sur l'ensemble des mesures ;
- sélection d'au moins un classifieur parmi les classifieurs les plus performants pour prédire les conditions de givrage.

De préférence, la détection de de présence de conditions givrantes pendant ledit vol utilise également des sources météorologiques externes audit aéronef.

La performance de prédiction d'un classifieur est estimée par exemple à partir de la valeur absolue moyenne de l'erreur de prédiction ou de la valeur quadratique moyenne de l'erreur de prédiction ou du taux de succès moyen de prédiction sur l'ensemble des mesures.

Les modèles de classification sont avantageusement choisis parmi un modèle de classification à arbre de décision, un modèle de classification à analyse discriminante linéaire, un modèle de classification à analyse discriminante quadratique, un modèle de classification à forêt d'arbres décisionnels, un modèle de classification utilisant un bagging d'arbres décisionnels, un modèle de classification utilisant un régression logistique, un modèle de classification utilisant la méthode des k plus proches voisins, un modèle de classification utilisant un boosting de classifieurs faibles.

**BRÈVE DESCRIPTION DES DESSINS**

D'autres caractéristiques et avantages de l'invention apparaîtront à la lecture d'un mode de réalisation préférentiel de l'invention, fait en référence aux figures jointes parmi lesquelles :

La Fig. 1 représente de manière schématique une méthode d'apprentissage supervisé pour entrainer une méthode de détection de conditions givrantes selon un mode de réalisation de l'invention;
La Fig. 2 illustre les performances d'une pluralité de modèles de classification après apprentissage supervisé selon la Fig. 1 ;
La Fig. 3 représente de manière schématique une méthode de détection de conditions givrantes selon un mode de réalisation de l'invention, après apprentissage supervisé selon la Fig. 1 ;
Les Figs. 4A-4D représentent de manière des exemples de détection de conditions givrantes par différents classifieurs.

**EXPOSÉ DÉTAILLÉ DE MODES DE RÉALISATION PARTICULIERS**

L'idée à la base de l'invention est d'utiliser les données avions disponibles, sans développement et installation de sondes/capteurs externes spécifiques et donc sans implantation de sondes/capteurs sur la peau de l'aéronef pour détecter la présence de conditions givrantes et estimer, le cas échéant, leur degré de sévérité. Par capteurs spécifiques, on entend ici des capteurs dont les mesures sont exclusivement destinées à la détection de présence de givre (par exemple un détecteur de cristaux de glace). Par données avion disponibles, on entend des données de systèmes avion dont le fonctionnement n'est pas dégradé par la formation de givre, autrement dit les données fiables dans une telle situation (par exemple les données issues d'une sonde anémométrique, risquant d'être bloquée par le givre, ne sont pas considérées comme des données disponibles).

Lorsqu'un aéronef rencontre des conditions givrantes, certains éléments de systèmes, tels que des capteurs ou des actionneurs de gouverne ont une réponse caractéristique, symptomatique de la présence de givre. Ces symptômes peuvent varier en nombre, en intensité, en fréquence selon le type de conditions givrantes rencontrées (cristaux de glace ou eau surfondue par exemple) et leur degré de sévérité (concentration de cristaux de glace). Dès lors, il est possible de sélectionner certains paramètres symptomatiques (de conditions givrantes) parmi les données disponibles des systèmes de l'aéronef et d'en déduire des paramètres explicatifs (dites encore variables explicatives ou « *features* ») de la présence de conditions givrantes et le cas échéant de leur sévérité. Ces variables explicatives sont utilisées en entrée d'un ou d'une pluralité de classifieurs pour déterminer s'il y a ou non présence de givre (classification binaire) ou pour appréhender le degré de sévérité des conditions givrantes (classification à $K$ modalités où $K$ est le nombre de classes). Les modèles de classification sont entraînés par apprentissage supervisé à partir de données disponibles acquises au moyen d'une instrumentation spécifique pendant des vols réalisés dans des conditions givrantes, comme expliqué plus loin.

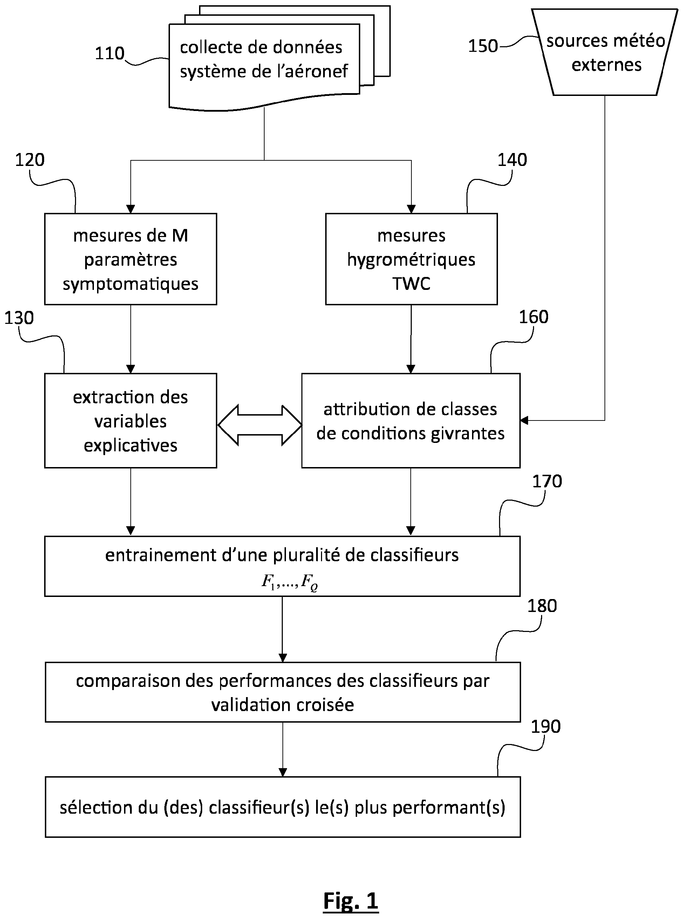

La Fig. 1 représente de manière schématique une méthode d'apprentissage supervisé pour un système de détection de conditions givrantes selon un mode de réalisation de l'invention.

Préalablement à l'apprentissage supervisé, des données disponibles obtenues lors de vols d'essai d'un aéronef en conditions givrantes sont collectées en 110. Ces données sont des mesures de paramètres de systèmes de l'aéronef insusceptibles de fonctionner en mode dégradé en présence de givre. En outre, l'aéronef d'essai est équipé lors de ces vols de capteurs dédiés à la détection directe de givre, dits capteurs de test.

On dispose par conséquent, d'une part, de mesures de paramètres avion et, d'autre part, d'un diagnostic quant à la présence ou l'absence de givre, éventuellement complété par une mesure de la teneur en eau (cristaux et eau surfondue).

Ensuite, parmi les paramètres mesurés, une pluralité $M$ de paramètres symptomatiques de la présence de givre est sélectionnée en 120. Ces paramètres symptomatiques seront avantageusement choisis parmi ceux listés dans les chapitres ATA 21 (air conditionné et pressurisation), ATA 27 (commandes de vol), ATA 28 (carburant), ATA 30 (protection givre et pluie), ATA 32 (train d'atterrissage), ATA 34 (navigation), ATA 36 (pneumatique), ATA 70 à ATA 79 (moteurs, commandes et indications moteurs, canaux FADEC pour *Full Authority Digital Engine Control*). Les paramètres symptomatiques sélectionnés sont typiquement des températures, des courants de circuits de chauffage, des pressions, des écarts entre commandes et retours d'actionneurs, des paramètres cinématiques (accélérations, taux de rotation, vitesse), altimétriques (altitude), barométriques (pression barométrique) et anémométriques (vitesse vent apparent).

A titre d'exemple, il est possible de choisir dans le chapitre ATA 21 les paramètres liés aux températures en différents points de la cabine, aux températures des conduits des systèmes de pressurisation et aux commandes de dégivrage, dans le chapitre ATA 27 les paramètres liés aux accélérations, à la clinométrie, au contrôle des surfaces (gouverne de profondeur et/ou ailerons et/ou spoiler), dans le chapitre ATA 28 les paramètres liés aux températures de fuel dans chaque compartiment, dans le chapitre ATA 30 les paramètres liés aux consommations en énergie et à l'alimentation électrique des composants de dégivrage et de protection contre le vent, dans le chapitre ATA 32 les paramètres liés aux températures des trains d'atterrissage, dans l'ATA 34 les paramètres liés à l'attitude de l'appareil (tangage, roulis, lacet), aux mesures dynamiques (accélération, taux de rotation), aux mesures anémobarométriques, dans le chapitre ATA 36 les paramètres liés au système de refroidissement, et dans le chapitre ATA 7X les paramètres liés aux vibrations et/ou aux informations de régulation et contrôle des moteurs.

Selon l'invention, les paramètres symptomatiques ne sont pas limités aux chapitres ATA listés ci-dessus et peuvent être issus d'autres chapitres tels que le chapitre ATA 42 (Avionique Modulaire Intégrée).

Les mesures de paramètres symptomatiques acquises en un instant donné forment un échantillon. L'ensemble des échantillons acquis pendant une campagne de mesure est noté $S$.

Les paramètres symptomatiques mesurés sont ensuite transformés en variables explicatives des conditions givrantes (opération dénommée « *features extraction* ») en 130. La transformation permettant de passer des paramètres symptomatiques aux variables explicatives peut notamment comprendre un calcul d'une moyenne, d'une médiane, d'un écart-type, d'une variance, une transformée de Fourier, un filtrage passe-bas ou passe-haut, une décomposition en ondelettes, un calcul de densité spectrale, etc. Cette opération a pour objet de supprimer ou de réduire l'information non explicative dans les mesures et de prévenir un sur-apprentissage (*overfitting*) sur les paramètres symptomatiques mesurés pendant les essais. Dans la suite les variables explicatives sont notées $X^1,...,X^P$. A chaque échantillon de $S$ est ainsi associé un $P$-uplet de valeurs de variables explicatives.

Les conditions givrantes, quant à elles, peuvent être simplement représentées par une variable à expliquer (ou variable cible) $Y$. Cette variable cible est binaire, lorsqu'il s'agit simplement de prédire la présence ou l'absence de givre, ou à $K$ modalités, lorsqu'il s'agit de prédire le degré de sévérité des conditions givrantes ($K$ étant alors le nombre de degrés de sévérité).

Les mesures des capteurs de test sont acquises en parallèle en 140. Ces capteurs de test sont par exemple des capteurs hygrométriques Lyman-alpha capables de donner la teneur totale en eau ou TWC (*Total Water Content*), indépendamment de la nature de sa phase (liquide ou vapeur).

Les mesures des capteurs de test peuvent être éventuellement complétées en 150 par des informations météorologiques contextuelles provenant de sources extérieures. A partir des mesures des capteurs de test et, le cas échéant de ces informations météorologiques contextuelles, la présence de givre ou non est déterminée en 160. Ainsi, une classe (*class labelling*) peut être attribuée à chaque $P$-uplet de valeurs de variables explicatives (et donc à chaque échantillon de $S$) en 130. La classification peut être simplement binaire (absence ou présence de givre) ou à $K$ modalités, par exemple la classification suivante à 4 modalités :

- absence de condition givrante ($TWC \leq 0.5$)
- condition givrante faible ($0.5 < TWC \leq 1.5$)
- condition givrante modérée ($1.5 < TWC \leq 3$)
- condition givrante sévère ($TWC > 3$)

D'autres classes pourront être envisagées par l'homme du métier sans sortir pour autant du cadre de la présente invention. Par exemple, il peut être prévu une classification opérant une distinction entre le taux de cristaux et le taux d'eau surfondue.

A partir des $P$-uplets de variables explicatives et des classes qui leur sont attribuées, plusieurs modèles de classification, $F_1,...,F_Q$ peuvent être entrainés sur l'ensemble $S$, comme indiqué en 170. Un modèle de classification est une fonction $F$ associant à tout $P$-uplet $(x^1, x^2,..., x^P)$ de valeurs de variables explicatives une prédiction $\hat{y}$ de la valeur de la variable à expliquer $Y$. Plus précisément, l'entrainement d'un classifieur consiste à définir, dans l'espace des variables explicatives, les domaines associés à chacune des modalités possibles de la variable à expliquer.

Différents modèles de classification peuvent être envisagés, certains exemples en étant fournis ci-après :

Tout d'abord, on pourra utiliser un modèle de type arbre de décision (*decision tree*) tel que CART (*Classification And Regression Tree*). Une classification par arbre de décision est réalisée en partitionnant par dichotomie l'espace des variables explicatives selon une structure arborescente, une classe étant associée à chaque feuille de l'arbre de décision. Ce modèle de classification est entrainé sur une partie $T$ de l'ensemble $S$ (*training data set*) et testé sur la partie restante $V$ de cet ensemble (*validation data set*).

Alternativement, un même modèle de classification (par exemple, un arbre de décision) peut être entrainé sur des sous-ensembles $T_1, T_2,..., T_N$ de $S$ obtenus en sous-échantillonnant $S$ de manière aléatoire. Les $N$ classifieurs résultant de cet entrainement peuvent être agrégés à l'aide d'une fonction d'agrégation (par exemple vote majoritaire). Cette technique est connue en apprentissage supervisé sous la dénomination de *bagging* (ou *boodstrap agregating*).

Selon une variante, un modèle de classification de type à forêt d'arbres de décision (*Random Forest Classifier*) peut aussi être utilisé. Selon cette approche, des classifieurs élémentaires à arbres de décision sont entrainés sur des sous-ensembles de $S$, chaque classifieur n'utilisant qu'une partie des variables à expliquer. Les classifieurs élémentaires ainsi obtenus sont ensuite agrégés par une décision à vote majoritaire, la classe prédite étant celle recueillant la majorité des voix des classifieurs élémentaires.

Alternativement, une technique dite de *boosting* combinant des prédictions de plusieurs classifieurs faibles peut également être utilisée. Un classifieur est dit faible si son taux d'erreur de prédiction est légèrement meilleur que celui d'une prédiction purement aléatoire (*random guessing*). En combinant les prédictions successives de ces classifieurs faibles, un classifieur présentant un faible taux d'erreur (*high accuracy level*) peut être obtenu. Les classifieurs faibles peuvent être par exemple des classifieurs à arbres de décision. Il existe différents types de boosting selon que le classifieur faible est entrainé sur les échantillons correspondant aux plus fortes erreurs de prédiction du classifieur faible précédent (Adaboost) ou sur les erreurs quadratiques de prédiction de ce classifieur (*Gradient Boosting*).

Le modèle de classification peut encore être fondé sur une analyse discriminante linéaire ou LDA (*Linear Discriminant Analysis*) voire une analyse discriminante quadratique ou QDA (*Quadratic Discriminant Analysis*). L'analyse discriminante linéaire suppose que la matrice de covariance des variables explicatives est identique pour les différentes classes. Les frontières de décision dans l'espace des variables sont alors des hyperplans. Lorsque les matrices de covariance dans les différentes classes ne sont pas identiques, la fonction de décision a une forme quadratique (QDA) : il est possible de se ramener au cas précédent en se plaçant dans un espace de plus grande dimension représentant non seulement les variables explicatives elles-mêmes mais également des variables quadratiques (produits deux à deux et carrés des variables explicatives).

Alternativement encore, le modèle de classification pourra utiliser une classification selon la méthode des $k$ plus proches voisins ou $k$-NN (*k Nearest Neighbors*). Dans cette méthode, pour prédire la classe associée à un $P$-uplet $\Omega$ donné de valeurs de variables explicatives, il est procédé à la recherche des $P$-uplets, $\omega_1,...,\omega_k$ les plus proches de $\Omega$, ayant été obtenus lors de l'apprentissage. La classe du $P$-uplet est alors prédite comme étant la classe prépondérante (vote majoritaire) parmi les classes respectivement associées à $\omega_1,...,\omega_k$.

Enfin, un modèle de classification basé sur une régression logistique (régression logistique multinomiale dans le cas d'une variable à expliquer à $K$ modalités) pourra alternativement être utilisé. Selon cette approche, les probabilités *a posteriori* des différentes classes, connaissant un $P$-uplet de valeurs de variables explicatives, sont modélisées au moyen de fonctions linéaires. Les coefficients de ces fonctions peuvent être déterminés comme ceux maximisant la vraisemblance logarithmique sur l'ensemble d'entrainement, la recherche du maximum étant effectuée de manière itérative sur les valeurs des coefficients.

Bien entendu, encore d'autres types de classifieurs pourront être envisagés comme par exemple les machines à vecteurs d'états (*State Vector Machine*).

Une description des différents modèles de classification mentionnés ci-dessus pourra être trouvée dans l'ouvrage de T. Hastie et al. intitulé « The elements of statistical learning », 2nde édition, 2017, publié chez Springer.

Les performances des $Q$ classifieurs, $F_1,...,F_Q$, correspondant aux différents modèles de classification, peuvent ensuite être comparées en utilisant une validation croisée (*cross validation*), comme indiqué en 180. Selon cette approche, l'ensemble $S$ des échantillons est partitionné en sous-ensembles (ou lots) $S_\gamma$, $\gamma = 1,...,\Gamma$, chaque classifieur $F_q$ étant entraîné sur un lot d'échan-

$$\bigcup_{\substack{\gamma=1,..,\Gamma \\ \gamma \neq \lambda}} S_\gamma$$

tillons et sa performance évaluée sur le sous-ensemble restant $S_\lambda$, ce pour $\lambda \in \{1,...,\Gamma\}$. La performance d'un classifieur peut être évaluée en termes de moyenne de la valeur absolue ou de l'erreur de prédiction ou d'erreur quadratique moyenne sur chaque sous-ensemble, le classifieur le plus performant conduisant à l'erreur moyenne la plus faible. Alternativement, la performance d'un classifieur peut être évaluée en taux de succès moyen de classification sur chaque sous-ensemble.

Le ou les classifieurs les plus performants au terme de la phase d'apprentissage supervisé peuvent ensuite être retenus, comme indiqué en 190.

Les classifieurs ainsi sélectionnés seront ensuite utilisés dans la phase de prédiction de conditions de givrage comme expliqué plus loin.

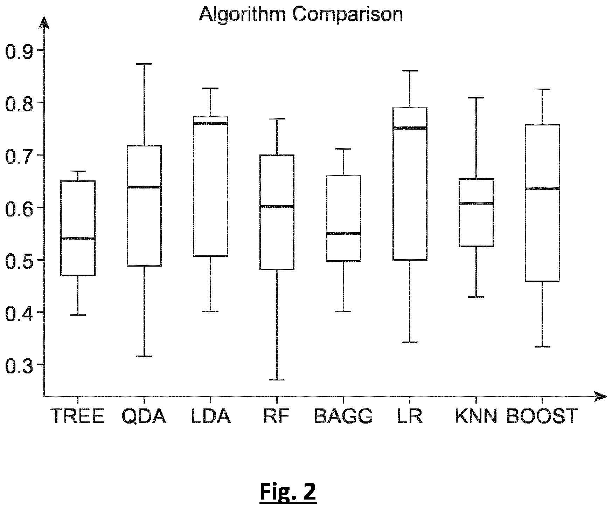

La Fig. 2 représente les performances d'une pluralité de modèles de classification au terme d'un apprentissage supervisé selon la Fig. 1.

Les différents types de modèles de classification sont indiqués en abscisses, à savoir :

- TREE est un modèle de classification à arbre de décision ;
- QDA est un modèle de classification utilisant une analyse discriminante quadratique ;
- LDA est un modèle de classification utilisant une analyse discriminante linéaire ;
- RF est un modèle de classification utilisant une forêt d'arbres décisionnels ;
- BAGG est un modèle de classification utilisant un bagging d'arbres décisionnels ;
- LR est un modèle de classification utilisant une régression logistique ;
- KNN est un modèle de classification utilisant la méthode des k plus proches voisins ;

- BOOST est un modèle de classification utilisant un boosting de classifieurs faibles.

Sur la figure, le taux de succès (*accuracy*) de chaque classifieur a été indiqué en ordonnées. Plus précisément, on a représenté pour chaque classifieur la distribution du taux de succès grâce une boite à moustaches (boxplot). La distribution du taux de succès est relative aux différentes partitions de l'ensemble des échantillons utilisées dans la validation croisée. Les moustaches correspondent à la valeur minimale et à la valeur maximale du taux de succès, les extrémités inférieure et supérieure d'une boite correspondent respectivement au quartile inférieur et au quartile supérieur, la barre horizontale à l'intérieur de la boite correspond à la valeur médiane.

Avantageusement, un classifieur présentant un taux de succès élevé, avec une valeur médiane élevée est choisi, par exemple, le modèle LR et/ou le modèle BOOST.

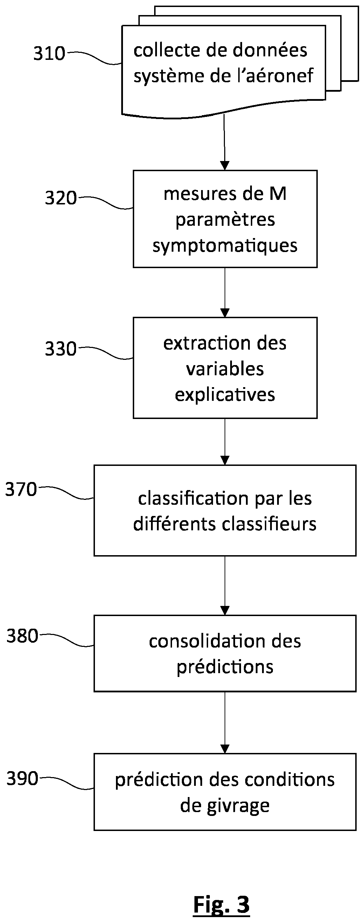

La Fig. 3 représente de manière schématique une méthode de détection de conditions givrantes selon un mode de réalisation de l'invention, après apprentissage supervisé selon la Fig. 1.

La méthode de détection est mise en œuvre au cours d'un vol opérationnel d'un aéronef, généralement du même type que celui utilisé pour les vols d'essais à ceci près qu'il ne comporte pas cette fois-ci de capteurs de test (*ice detector*) capables d'indiquer directement la présence ou l'absence de givre.

A l'étape 310, les données disponibles des systèmes de l'aéronef sont collectées à intervalles réguliers, ces systèmes étant insusceptibles de fonctionnement dégradé en présence de givre. Autrement dit, la modification de comportement ou le changement d'état de ces systèmes en présence de givre permet d'en confirmer la présence sans pour autant altérer la sécurité du vol.

A l'étape 320, les mesures des paramètres symptomatiques de la présence de givre sont extraites et, le cas échéant stockées dans une mémoire. Ces paramètres symptomatiques sont en principe les mêmes que ceux choisis pour la méthode d'apprentissage. Autrement dit, ces paramètres symptomatiques auront été choisis parmi ceux listés dans les chapitres ATA21, ATA27, ATA28, ATA30, ATA32, ATA34, ATA36, ATA70 à ATA79. Toutefois, si les classifieurs retenus au terme de la période d'apprentissage n'utilisent pas certains paramètres symptomatiques, ceux-ci pourront être omis dans cette phase d'acquisition.

A l'étape 330, les mesures des paramètres symptomatiques en valeurs de variables explicatives sont transformées, comme expliqué précédemment en relation avec l'étape 130 de la Fig. 1.

La transformation des paramètres symptomatiques est réalisée par un module de calcul, tel qu'un processeur configuré à cet effet.

A l'étape 370, chaque classifieur, entrainé sur les données des vols d'essai et sélectionné à l'étape 190 de l'apprentissage supervisé prédit la classe de conditions de givrage associée aux valeurs de variables explicatives obtenues à l'étape précédente. La classification est de même type que celle entrainée lors de la phase d'apprentissage. Elle peut être binaire ou $\log_2 K$ -aire selon qu'une prédiction de présence/ absence de givre ou qu'une prédiction du degré de sévérité des conditions de givrage est souhaitée.

En tout état de cause, lorsque plusieurs classifieurs ont été sélectionnés, leurs prédictions respectives sont consolidées à l'étape 380, par exemple selon une procédure de vote majoritaire. Lorsque le nombre de classifieurs sélectionnés est pair, il peut être convenu que l'un d'entre eux a voix prépondérante. Selon une variante, des régresseurs peuvent être utilisés en lieu et place des classifieurs pour estimer chacun un degré (continu) de sévérité, et effectuer une moyenne entre eux avant discrétisation éventuelle.

Selon le résultat de la consolidation, on détermine en 390 s'il y a présence de givre ou non (classification binaire) ou le degré de sévérité des conditions de givrage (classification multinomiale).

Les étapes de classification, de consolidation et de prédiction sont effectuées par un ou plusieurs modules de calcul. Ces modules de calcul peuvent être des modules matériels ou des modules logiciels, par exemple des modules logiciels exécutés par le processeur précité. Le cas échéant, les classifieurs peuvent être implémentés dans des processeurs distincts opérant en parallèle, la consolidation et la prédiction étant effectuées par un circuit de logique combinatoire programmable, tel qu'un FPGA. L'homme du métier pourra envisager différents modes d'implémentation de ces étapes sans sortir du cadre de la présente invention.

La méthode de prédiction des conditions de givrage peut être exécutée entièrement à bord de l'aéronef, dans un équipement embarqué type FWC (*Flight Warning Computer*) ou EFB (*Electronique Flight Bag*), après que les classifieurs aient été entrainés au sol (ou dans l'avion d'essai). Alternativement, les paramètres symptomatiques peuvent être transmis au sol pour un monitoring distant de type ARTHM (*Airbus Real Time Health Monitoring*) avec renvoi du résultat de prédiction vers l'aéronef. Dans tous les cas, la condition de givrage prédite ou estimée pourra être affichée sur un écran du cockpit et éventuellement générer une alarme. Le pilote aura alors la possibilité d'activer les systèmes de protection contre le givre. Alternativement, la condition de givrage pourra déclencher automatiquement des systèmes de protection contre le givre.

A titre d'exemple, une méthode de détection de conditions de givrage est décrite ci-après.

Les paramètres symptomatiques ont été choisis dans ATA27, ATA34 et ATA7X à savoir les paramètres de contrôle de vol FCPC redondés (*Flight Control Primary Computer*) *_FCPC1_COM ; *_FCPC2_COM ; *_FCPC3_COM, les paramètres cinématiques redondés ADIRU (*Air Data Inertial Reference Unit*) ADIRU_*_1, ADIRU_*_2, ADIRU_*_3 et les canaux de régulation A-B FADEC des deux moteurs, à savoir POLOCAL_[1;2]A ; P0LOCAL_[1;2]B ; T12LOCAL_[1;2]A ; T12LOCAL_[1;2]B.

Les variables explicatives sont obtenues en prenant :

- la valeur médiane de *_FCPC1_COM, *_FCPC2_COM, *_FCPC3_COM puis en calculant la valeur min, max, mode et médiane de la valeur obtenue sur une fenêtre glissante de 10s ;
- la valeur médiane de ADIRU_*_1, ADIRU_*_2, ADIRU_*_3 puis en calculant la valeur min, max, mode et médiane de la valeur obtenue sur une fenêtre glissante de 10s ;
- la valeur maximale de POLOCAL_[1;2]A et P0LOCAL_[1;2]B, puis en calculant la valeur min, max, mode et médiane de la valeur obtenue sur une fenêtre glissante de 10s ;
- la valeur maximale de T12LOCAL_[1;2]A; T12LOCAL_[1;2]B, puis en calculant la valeur min, max, mode et médiane de la valeur obtenue sur une fenêtre glissante de 10s.

La classification était à 4 degrés de sévérité de conditions de givrage comme indiqué plus haut.

Toutefois, au lieu d'utiliser un seul classifieur multinomial, 4 classifieurs binaires ont été utilisés pour chacun des intervalles de TWC. Les 4 classifieurs sont basés sur des modèles de classification indépendants de type Gradient Boosting. La Table I indique les performances des classifieurs en termes de taux de succès (accuracy) et de précision (sensitivity) :

Table I

|  | $\tau$ (%) | $\sigma$ (%) |
|---|---|---|
| modèle #1 | 96.80 | 97.16 |
| modèle #2 | 96.07 | 97.96 |
| modèle #3 | 97.32 | 82.08 |
| modèle #4 | 97.36 | 88.33 |

Le taux de succès $\tau$ est défini comme le rapport entre la somme du nombre de prédictions qui sont effectivement positives (*TP*) et du nombre de prédictions qui sont effectivement négatives (*TN*) sur l'ensemble des prédictions positives et négatives (erronées ou non):

$$\tau = \frac{TP + TN}{TP + TN + FP + FN}$$

où *FP* (resp. *FN*) est le nombre de prédictions faussement positives (faussement négatives).

La précision est la fraction de prédictions positives qui sont effectivement positives :

$$\sigma = \frac{TP}{TP + FP}$$

Il est dès lors possible de classifier correctement les conditions givrantes à partir de paramètres symptomatiques sans ajout d'une quelconque sonde spécifique (capteur de givre) et avec un taux de succès de l'ordre de 80%.

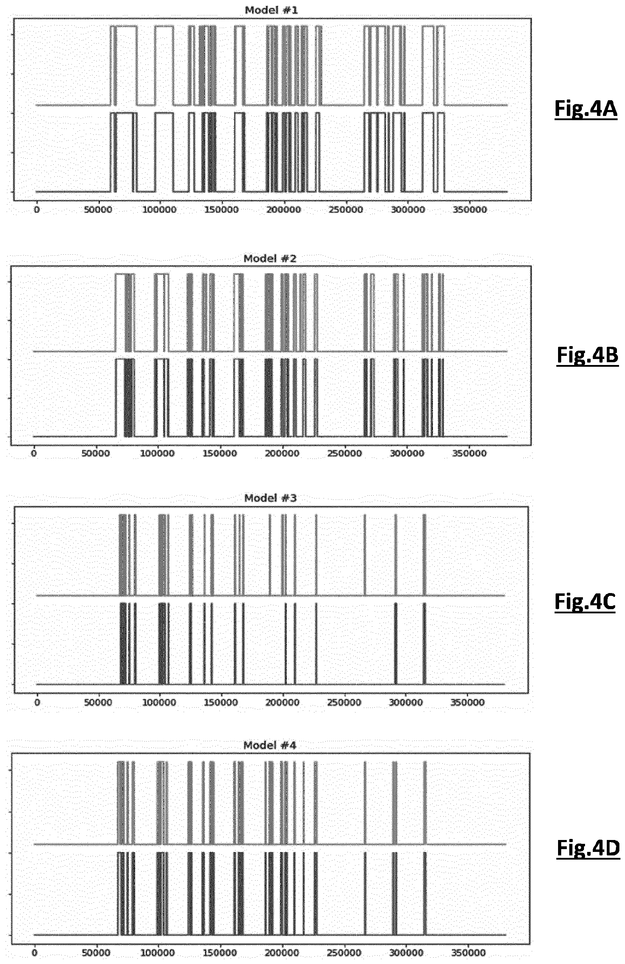

Les Figs 4A à 4D représentent les résultats de classification de conditions givrantes par des classifieurs basés sur les quatre modèles de classification précités.

Le premier modèle de classification en Fig. 4A prédit la condition (variable à expliquer binaire) $TWC \leq 0.5$, le deuxième modèle de classification en Fig. 4B, prédit la condition $0.5 < TWC \leq 1.5$, le troisième modèle de classification en Fig. 4C prédit la condition $1.5 < TWC \leq 3$ et enfin le quatrième modèle de classification en Fig. 4D prédit la condition $TWC > 3$. Pour chacune de ces figures, il a été représenté dans la partie supérieure, la condition givrante réelle et, dans la partie inférieure, la condition givrante prédite par le classifieur correspondant. L'homme du métier notera une très bonne corrélation entre les conditions prédites et les conditions réelles quel que soit le degré de sévérité des conditions de givrage.

**Revendications**

1. Méthode de détection de conditions de givrage pour un aéronef **caractérisée en ce qu'**elle comprend les étapes suivantes :

   - mesure (320) de paramètres de systèmes de l'aéronef à l'exception de sondes externes de détection de givre, lesdits systèmes étant insusceptibles de fonctionnement dégradé en présence de givre et lesdits paramètres étant symptomatiques de la présence de givre sur l'aéronef;
   - transformation (330) des mesures de ces paramètres en P -uplets de valeurs de variables explicatives des conditions de givrage ;
   - classification (370) des mesures par au moins un classifieur préalablement entrainé de manière supervisée, ledit classifieurfournissant une prédiction d'appartenance à une classe de conditions de givrage.

2. Méthode de détection de conditions de givrage selon la revendication 1, **caractérisée en ce que** les paramètres de systèmes de l'aéronef sont choisis parmi les listes de paramètres de ATA21, ATA27, ATA28, ATA30, ATA32, ATA34, ATA36, ATA70 à ATA79.

3. Méthode de détection de conditions de givrage selon la revendication 1, **caractérisée en ce que** les paramètres sont sélectionnés parmi des températures, des courants de circuits de chauffage, des pressions, des écarts entre commandes et retours d'actionneurs, des paramètres cinématiques, altimétriques, barométriques et anémométriques.

4. Méthode de détection de conditions de givrage selon l'une quelconque des revendications précédentes, **caractérisée en ce que** la transformation des mesures de paramètres en valeurs de variables explicatives comprend le calcul d'une moyenne, d'une médiane, d'un écart-type, d'une variance, une transformée de Fourier, un filtrage passe-bas ou passe-haut, une décomposition en ondelettes, un calcul de densité spectrale.

5. Méthode de détection de conditions de givrage selon l'une quelconque des revendications précédentes, **caractérisée en ce que** l'étape de classification (370) est effectuée par une pluralité de classifieurs, les prédictions respectives de ces classifieurs étant consolidées (380), le résultat de la consolidation donnant une prédiction (390) de la présence/absence de givre ou non, ou bien un degré de sévérité des conditions de givrage.

6. Méthode de détection de conditions de givrage selon la revendication 5, **caractérisée en ce que** les classifieurs utilisent des modèles de classification choisis parmi un modèle de classification à arbre de décision, un modèle de classification à analyse discriminante linéaire, un modèle de classification à analyse discriminante quadratique, un modèle de classification à forêt d'arbres décisionnels, un modèle de classification utilisant un bagging d'arbres décisionnels, un modèle de classification utilisant un régression logistique, un modèle de classification utilisant la méthode des k plus proches voisins, un modèle de classification utilisant un boosting de classifieurs faibles.

7. Méthode de détection de conditions de givrage selon la revendication 5 ou 6, **caractérisée en ce que** les mesures de paramètres sont transmises par l'appareil à une station au sol, ladite station au sol effectuant lesdites étapes de transformation et de classification puis renvoyant le résultat de la consolidation à l'aéronef.

8. Méthode d'entrainement supervisé d'une méthode de détection de conditions de givrage selon la revendication 1, **caractérisée par** les étapes suivantes :

   - mesure (120) desdits paramètres de systèmes de l'aéronef pendant un vol en conditions givrantes;
   - transformation (130) des mesures de ces paramètres en P -uplets de valeurs de variables explicatives des conditions de givrage ;

- détection (140) de présence de conditions givrantes pendant ledit vol au moyen de sondes dédiées situées sur l'aéronef;

- attribution (160) de classes de conditions givrantes auxdites mesures à partir des conditions détectées à l'étape précédente ;

- entrainement (170) d'une pluralité de classifieurs à partir des variables explicatives et des classes correspondantes attribuées ;

- comparaison (180) des performances de prédiction desdits classifieurs par validation croisée sur l'ensemble des mesures ;

- sélection (190) d'au moins un classifieur parmi les classifieurs les plus performants pour prédire les conditions de givrage.

9. Méthode d'entrainement supervisé selon la revendication 8, **caractérisée en ce que** la détection de de présence de conditions givrantes pendant ledit vol utilise également des sources météorologiques externes audit aéronef.

10. Méthode d'entrainement supervisé selon la revendication 8 ou 9, **caractérisée en ce que** la performance de prédiction d'un classifieur est estimée à partir de la valeur absolue moyenne de l'erreur de prédiction ou de la valeur quadratique moyenne de l'erreur de prédiction ou du taux de succès moyen de prédiction sur l'ensemble des mesures.

11. Méthode d'entrainement supervisé selon la revendication 10, **caractérisée en ce que** les classifieurs utilisent des modèles de classification choisis parmi un modèle de classification à arbre de décision, un modèle de classification à analyse discriminante linéaire, un modèle de classification à analyse discriminante quadratique, un modèle de classification à forêt d'arbres décisionnels, un modèle de classification utilisant un bagging d'arbres décisionnels, un modèle de classification utilisant un régression logistique, un modèle de classification utilisant la méthode des k plus proches voisins, un modèle de classification utilisant un boosting de classifieurs faibles.

**Patentansprüche**

1. Verfahren zur Erkennung von Vereisungsbedingungen für ein Luftfahrzeug, **dadurch gekennzeichnet, dass** es die folgenden Schritte umfasst:

- Messen (320) von Parametern von Systemen des Luftfahrzeugs, ausgenommen externe Sonden zur Erkennung von Eis, wobei die Systeme bei Vorhandensein von Eis keiner verschlechterten Funktionstüchtigkeit unterliegen und die Parameter für das Vorhandensein von Eis auf dem Luftfahrzeug symptomatisch sind;

- Umwandeln (330) der Messungen dieser Parameter in P-Tupel von Werten erklärender Variablen der Vereisungsbedingungen;

- Klassifizieren (370) der Messungen durch mindestens einen Klassifizierer, der zuvor auf überwachte Weise trainiert wurde, wobei der Klassifizierer eine Vorhersage einer Zugehörigkeit zu einer Klasse von Vereisungsbedingungen bereitstellt.

2. Verfahren zur Erkennung von Vereisungsbedingungen nach Anspruch 1, **dadurch gekennzeichnet, dass** die Parameter von Systemen des Luftfahrzeugs aus den Listen von Parametern von ATA21, ATA27, ATA28, ATA30, ATA32, ATA34, ATA36, ATA70 bis ATA79 ausgewählt sind.

3. Verfahren zur Erkennung von Vereisungsbedingungen nach Anspruch 1, **dadurch gekennzeichnet, dass** die Parameter aus Temperaturen, Strömen von Heizkreisläufen, Drücken, Abweichungen zwischen Befehlen und Rückmeldungen von Betätigungselementen, kinematischen, altimetrischen, barometrischen und anemometrischen Parametern ausgewählt sind.

4. Verfahren zur Erkennung von Vereisungsbedingungen nach einem der vorhergehenden Ansprüche, **dadurch gekennzeichnet, dass** das Umwandeln der Messungen von Parametern in Werte erklärender Variablen das Berechnen eines Durchschnitts, eines Medians, einer Standardabweichung, einer Varianz, eine Fourier-Transformierte, eine Tiefpass- oder Hochpassfilterung, eine Zerlegung in Wavelets, eine Berechnung einer Spektraldichte umfasst.

5. Verfahren zur Erkennung von Vereisungsbedingungen nach einem der vorhergehenden Ansprüche, **dadurch gekennzeichnet, dass** der Schritt des Klassifizierens (370) durch eine Mehrzahl von Klassifizierern durchgeführt wird, wobei die jeweiligen Vorhersagen dieser Klassifizierer konsolidiert (380) werden, wobei das Ergebnis der Konsolidierung eine Vorhersage (390) des Vorhandenseins/Nichtvorhandenseins von Eis oder nicht oder einen Schweregrad der Vereisungsbedingungen angibt.

6. Verfahren zur Erkennung von Vereisungsbedingungen nach Anspruch 5, **dadurch gekennzeichnet, dass** die Klassifizierer Klassifizierungsmodelle nutzen, die aus einem Entscheidungsbaum-Klassifizierungsmodell, einem Klassifizierungsmodell mit linearer Diskriminanzanalyse, einem Klassifizierungsmodell mit quadratischer Diskriminanzanalyse, einem Klassifizierungsmodell mit einem Wald von Entscheidungsbäumen, einem Klassifizierungsmodell, das ein Bagging von Entscheidungsbäumen nutzt, einem Klassifizierungsmodell, das eine logistische Regression nutzt, einem Klassifizierungsmodell, das das Verfahren der k nächsten Nachbarn nutzt, einem Klassifizierungsmodell, das ein Boosting schwacher Klassifizierer nutzt, ausgewählt sind.

7. Verfahren zur Erkennung von Vereisungsbedingungen nach Anspruch 5 oder 6, **dadurch gekennzeichnet, dass** die Messungen von Parametern von der Maschine an eine Bodenstation übertragen werden, wobei die Bodenstation die Schritte des Umwandelns und des Klassifizierens durchführt, dann das Ergebnis der Konsolidierung an das Luftfahrzeug zurücksendet.

8. Verfahren für überwachtes Training eines Verfahrens zur Erkennung von Vereisungsbedingungen nach Anspruch 1, **gekennzeichnet durch** die folgenden Schritte:

    - Messen (120) der Parameter von Systemen des Luftfahrzeugs während eines Flugs unter Vereisungsbedingungen;
    - Umwandeln (130) der Messungen dieser Parameter in P-Tupel von Werten erklärender Variablen der Vereisungsbedingungen;
    - Erkennen (140) eines Vorhandenseins von Vereisungsbedingungen während des Flugs mittels dedizierter Sonden, die sich am Luftfahrzeug befinden;
    - Zuweisen (160) von Klassen von Vereisungsbedingungen an die Messungen ausgehend von den Bedingungen, die im vorigen Schritt erkannt wurden;
    - Trainieren (170) einer Mehrzahl von Klassifizierern ausgehend von den erklärenden Variablen und den zugewiesenen entsprechenden Klassen;
    - Vergleichen (180) der Vorhersageleistungen der Klassifizierer durch Kreuzvalidierung bei der Gesamtheit der Messungen;
    - Auswählen (190) mindestens eines Klassifizierers unter den leistungsfähigsten Klassifizierern, um die Vereisungsbedingungen vorherzusagen.

9. Verfahren für überwachtes Training nach Anspruch 8, **dadurch gekennzeichnet, dass** das Erkennen des Vorhandenseins von Vereisungsbedingungen während des Flugs ebenfalls meteorologische Quellen nutzt, die sich außerhalb des Luftfahrzeugs befinden.

10. Verfahren für überwachtes Training nach Anspruch 8 oder 9, **dadurch gekennzeichnet, dass** die Vorhersageleistung eines Klassifizierers ausgehend von dem mittleren Absolutwert des Vorhersagefehlers oder des quadratischen Mittelwerts des Vorhersagefehlers oder der mittleren Vorhersageerfolgsrate bei der Gesamtheit der Messungen geschätzt wird.

11. Verfahren für überwachtes Training nach Anspruch 10, **dadurch gekennzeichnet, dass** die Klassifizierer Klassifizierungsmodelle nutzen, die aus einem Entscheidungsbaum-Klassifizierungsmodell, einem Klassifizierungsmodell mit linearer Diskriminanzanalyse, einem Klassifizierungsmodell mit quadratischer Diskriminanzanalyse, einem Klassifizierungsmodell mit einem Wald von Entscheidungsbäumen, einem Klassifizierungsmodell, das ein Bagging von Entscheidungsbäumen nutzt, einem Klassifizierungsmodell, das eine logistische Regression nutzt, einem Klassifizierungsmodell, das das Verfahren der k nächsten Nachbarn nutzt, einem Klassifizierungsmodell, das ein Boosting schwacher Klassifizierer nutzt, ausgewählt sind.

**Claims**

1. Method for detecting icing conditions for an aircraft, **characterized in that** it comprises the following steps:

    - measurement (320) of parameters of systems of the aircraft with the exception of ice-detecting external probes, the said systems being unsusceptible to degraded operation in the presence of ice and the said parameters being symptomatic of the presence of ice on the aircraft;
    - transformation (330) of the measurements of these parameters into $P$-tuples of values of explanatory variables which explain the icing conditions;
    - classification (370) of the measurements by at least one classifier previously trained in a supervised manner, the said classifier providing a prediction of membership in a class of icing conditions.

2. Method for detecting icing conditions according to Claim 1, **characterized in that** the parameters of systems of the aircraft are chosen from among the lists of parameters from ATA21, ATA27, ATA28, ATA30, ATA32, ATA34, ATA36, ATA70 to ATA79.

3. Method for detecting icing conditions according to Claim 1, **characterized in that** the parameters are selected from among temperatures, currents of heating circuits, pressures, disparities between actuator commands and feedbacks, kinematic, altimetric, barometric and anemometric parameters.

4. Method for detecting icing conditions according to any one of the preceding claims, **characterized in that** the transformation of the measurements of parameters into values of explanatory variables comprises the calculation of a mean, of a median, of a standard deviation, of a variance, a Fourier transform, a low-pass or high-pass filtering, a wavelet decomposition, a spectral density calculation.

5. Method for detecting icing conditions according to any one of the preceding claims, **characterized in that** the classification step (370) is performed by a plurality of classifiers, the respective predictions of these classifiers being consolidated (380), the result of the consolidation giving a prediction (390) of the presence/absence of ice or otherwise, or else a degree of severity of the icing conditions.

6. Method for detecting icing conditions according to Claim 5, **characterized in that** the classifiers use classification models chosen from among a decision-tree classification model, a classification model based on linear discriminant analysis, a classification model based on quadratic discriminant analysis, a classification model based on a forest of decision trees, a classification model using a bagging of decision trees, a classification model using a logistic regression, a classification model using the method of k nearest neighbours, a classification model using a boosting of weak classifiers.

7. Method for detecting icing conditions according to Claim 5 or 6, **characterized in that** the measurements of parameters are transmitted by the craft to a ground station, the said ground station performing the said transformation and classification steps and then returning the result of the consolidation to the aircraft.

8. Method of supervised training of a method for detecting icing conditions according to Claim 1, **characterized by** the following steps:

   - measurement (120) of the said parameters of systems of the aircraft during a flight under freezing conditions;
   - transformation (130) of the measurements of these parameters into *P*-tuples of values of explanatory variables which explain the icing conditions;
   - detection (140) of presence of freezing conditions during the said flight by means of dedicated probes situated on the aircraft;
   - allocation (160) of classes of freezing conditions to the said measurements on the basis of the conditions detected in the previous step;
   - training (170) of a plurality of classifiers on the basis of the explanatory variables and of the corresponding classes allocated;

   - comparison (180) of the prediction performance of the said classifiers by cross-validation over the set of measurements;
   - selection (190) of at least one classifier from among the best performing classifiers to predict the icing conditions.

9. Method of supervised training according to Claim 8, **characterized in that** the detection of presence of freezing conditions during the said flight also uses meteorological sources external to the said aircraft.

10. Method of supervised training according to Claim 8 or 9, **characterized in that** the prediction performance of a classifier is estimated on the basis of the mean absolute value of the prediction error or of the mean square value of the prediction error or of the mean success rate of prediction over the set of measurements.

11. Method of supervised training according to Claim 10, **characterized in that** the classifiers use classification models chosen from among a decision-tree classification model, a classification model based on linear discriminant analysis, a classification model based on quadratic discriminant analysis, a classification model based on a forest of decision trees, a classification model using a bagging of decision trees, a classification model using a logistic regression, a classification model using the method of k nearest neighbours, a classification model using a boosting of weak classifiers.

110 — collecte de données
système de l'aéronef

150 — sources météo
externes

120

mesures de M
paramètres
symptomatiques

140

mesures
hygrométriques
TWC

130

extraction des
variables
explicatives

$\Longleftrightarrow$

attribution de classes
de conditions givrantes

160

170

entrainement d'une pluralité de classifieurs

$F_1, ..., F_Q$

180

comparaison des performances des classifieurs par
validation croisée

190

sélection du (des) classifieur(s) le(s) plus performant(s)

**Fig. 1**

Algorithm Comparison

**Fig. 2**

310 — collecte de données système de l'aéronef

320 — mesures de M paramètres symptomatiques

330 — extraction des variables explicatives

370 — classification par les différents classifieurs

380 — consolidation des prédictions

390 — prédiction des conditions de givrage

**Fig. 3**

**Model #1**

**Fig.4A**

**Model #2**

**Fig.4B**

**Model #3**

**Fig.4C**

**Model #4**

**Fig.4D**

**EP 3 517 442 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2979980 A1

**Littérature non-brevet citée dans la description**

- **T. HASTIE et al.** The elements of statistical learning. Springer